# EUROPÄISCHE PATENTANMELDUNG

(11) **EP 3 835 815 A1**
(43) Veröffentlichungstag der Anmeldung: **16.06.2021**
(21) Anmeldenummer: 20211176.1
(22) Anmeldetag: 02.12.2020
(51) Int. Cl.: G01S 7/481, G01S 17/42

(54) **UMLENKSPIEGELEINRICHTUNG FÜR EINE OPTISCHE DETEKTIONSVORRICHTUNG UND OPTISCHE DETEKTIONSVORRICHTUNG**

(30) Priorität: 12.12.2019 DE 102019134191
(71) Anmelder: Valeo Schalter und Sensoren GmbH, 74321 Bietigheim-Bissingen (DE)
(72) Erfinder: Simon, Jan, Christoph, 74321 Bietigheim-Bissingen (DE)
(74) Vertreter: Kluth, Philipp

(57) **Zusammenfassung**

Es werden eine Umlenkspiegeleinrichtung für eine optische Detektionsvorrichtung zur Erfassung von Objekten in wenigstens einem Überwachungsbereich (14) und eine optische Detektionsvorrichtung beschrieben. Die Umlenkspiegeleinrichtung umfasst wenigstens einen Spiegelflächenanordnung (44), welche wenigstens einen Spiegelflächenabschnitt (52a, 52b, 52c, 52d) zur Umlenkung von optischen Signalen (30) aufweist, und wenigstens eine Drehachse (46), um die die wenigstens eine Spiegelflächenanordnung (44) drehbar ist. Wenigstens zwei Spiegelflächenabschnitte (52a, 52b, 52c, 52d; 152b), die sich bezüglich der wenigstens einen Drehachse (46) auf derselben Umfangsseite befinden, weisen unterschiedliche Richtungen (56a, 56b, 56c, 56d) auf.

## Beschreibung

### Technisches Gebiet

Die Erfindung betrifft eine Umlenkspiegeleinrichtung für eine optische Detektionsvorrichtung zur Erfassung von Objekten in wenigstens einem Überwachungsbereich,
- mit wenigstens einer Spiegelflächenanordnung, welche wenigstens einen Spiegelflächenabschnitt zur Umlenkung von optischen Signalen aufweist,
- mit wenigstens einer Drehachse, um die die wenigstens eine Spiegelflächenanordnung drehbar ist.

Ferner betrifft die Erfindung eine optische Detektionsvorrichtung zur Überwachung wenigstens eines Überwachungsbereichs auf Objekte hin,
- mit wenigstens einem optoelektronischen Bauteil zur Umwandlung zwischen optischen Signalen und elektrischen Signalen,
- mit wenigstens einer Umlenkspiegeleinrichtung, mit welcher die optischen Signale umgelenkt werden können,
- wobei die wenigstens eine Umlenkspiegeleinrichtung aufweist
- wenigstens eine Spiegelflächenanordnung zur Umlenkung von optischen Signalen,
- und wenigstens eine Drehachse, um die die wenigstens eine Spiegelflächenanordnung drehbar ist.

### Stand der Technik

Aus der EP 2 625 542 B1 ist eine Umlenkspiegelanordnung für eine optische Messvorrichtung mit wenigstens zwei Spiegeleinheiten, welche auf einer drehbaren Achse angeordnet sind, und einer Antriebseinheit, welche die drehbare Achse antreibt, bekannt.

Der Erfindung liegt die Aufgabe zugrunde, eine Umlenkspiegeleinrichtung und eine optische Detektionsvorrichtung der eingangs genannten Art zu gestalten, bei denen die Leistungsfähigkeit der optischen Detektionsvorrichtung insbesondere in Bezug auf eine Auflösung und/oder eine Detektionsreichweite besser an den zu überwachenden Überwachungsbereich angepasst werden kann.

### Offenbarung der Erfindung

Diese Aufgabe wird erfindungsgemäß bei der Umlenkspiegeleinrichtung dadurch gelöst, dass wenigstens zwei Spiegelflächenabschnitte, die sich bezüglich der wenigstens einen Drehachse auf derselben Umfangsseite befinden, unterschiedliche Richtungen aufweisen.

Die Richtung eines Spiegelflächenabschnitts im Sinne der Erfindung ist die Normale, also die Senkrechte, auf die Oberfläche des entsprechenden Spiegelflächenabschnitts. Jede Richtung eines Spiegelflächenabschnitts kann bezogen auf die wenigstens eine Drehachse in mehrere Richtungskomponenten unterteilt werden. Vorteilhafterweise kann eine Richtungskomponente in einer Ebene mit der entsprechenden wenigstens einen Drehachse liegen. Eine weitere Richtungskomponente kann in einer Ebene senkrecht zu der wenigstens einen Drehachse liegen. Auf diese Weise kann die Richtung eines Spiegelflächenabschnitts bezüglich der wenigstens einen Drehachse durch zwei orthogonale Richtungskomponenten beschrieben werden.

Erfindungsgemäß ist die Spiegelflächenanordnung mit Spiegelflächenabschnitten mit unterschiedlichen Richtungen versehen. Auf diese Weise können optische Signale, welche auf die Spiegelflächenanordnung gesendet werden, in unterschiedliche Richtungen umgelenkt werden. So kann insbesondere ein räumlich ausgedehntes optisches Signal, welches auf mehrere nebeneinanderliegende Spiegelflächenabschnitte trifft, entsprechend der Richtung der beteiligten Spiegelflächenabschnitte in unterschiedliche Richtungen umgelenkt werden.

Divergieren die Richtungen der mit einem optischen Signal angeleuchteten Spiegelflächenabschnitte, so kann ein optisches Signal bei der Umlenkung zusätzlich aufgefächert werden. Durch das Auffächern wird erreicht, dass sich das Signal über einen größeren Bereich des Überwachungsbereichs ausbreiten kann und somit ein größerer Überwachungsbereich simultan überwacht werden kann.

Sind die Richtung der Spiegelflächen einander zugewandt, so kann ein optisches Signal bei der Umlenkung entsprechend konzentriert werden. Mit einem konzentrierten optischen Signal kann eine größere Detektionsreichweite erreicht werden.

Mithilfe der Erfindung kann der Überwachungsbereich in unterschiedliche Abschnitte unterteilt werden, in denen je nach Bedarf eine größere Auflösung oder eine größere Detektionsreichweite ermöglicht wird.

Bei der Verwendung der optischen Detektionsvorrichtung im Straßenverkehr, insbesondere bei einem Kraftfahrzeug, kann die optische Detektionsvorrichtung zur Überwachung eines Überwachungsbereichs in Fahrtrichtung vor dem Kraftfahrzeug eingesetzt werden. Mithilfe der erfindungsgemäßen Umlenkspiegeleinrichtung kann ein Fahrbereich in Fahrtrichtung vor dem Kraftfahrzeug mit einer hohen Auflösung detektiert werden. Auf diese Weise können insbesondere Personen, andere Fahrzeuge, Tiere oder dergleichen erkannt werden, welche sich auf dem eingeschlagenen Fahrweg vor dem Fahrzeug befinden. Aus Sicherheitsgründen ist es wichtig, dass alle, auch kleine, Hindernisse, mit denen das Kraftfahrzeug auf dem eingeschlagenen Fahrweg kollidieren könnte, zuverlässig erfasst werden. Daher ist hier eine entsprechend große Auflösung von großem Vorteil.

Für Abschnitte des Überwachungsbereichs, welche sich in einer Höhe befinden, die größer ist, als die Höhe des Kraftfahrzeugs, ist eine geringere Auflösung ausreichend, da das Kraftfahrzeug mit dort befindlichen Objekte nicht kollidieren kann. Durch die entsprechende Ausrichtung der hierfür zuständigen Spiegelflächenabschnitte kann der Überwachungsbereich auf Kosten der Auflösung dort nach oben hin ausgeweitet werden. So können auch Objekte, die allgemein für die Funktion des Kraftfahrzeugs von Interesse sind, insbesondere Straßenschilder, Markierungen, Brücken oder dergleichen erfasst werden.

Ferner ist für Abschnitte des Überwachungsbereich, welche sich im Nahfeld direkt vor dem Fahrzeug befinden ebenfalls eine geringere Auflösung ausreichend. So kann auch hier durch ansprechen der Ausrichtung der hierfür zuständigen Spiegelflächenabschnitte der Überwachungsbereich auf Kosten der Auflösung nach unten hin ausgeweitet werden. So kann insbesondere bei Antritt einer Fahrt in diesem Abschnitt des Überwachungsbereichs überprüft werden, ob sich dort Hindernisse, insbesondere spielende Kinder, Tiere oder dergleichen finden.

Vorteilhafterweise kann die wenigstens eine Detektionsvorrichtung nach einem Lichtlaufzeitverfahren, insbesondere einem Lichtimpulslaufzeitverfahren, arbeiten. Nach dem Lichtimpulslaufzeitverfahren arbeitende optische Detektionsvorrichtungen können als Time-of-Flight- (TOF), Light-Detection-and-Ranging-Systeme (LiDAR), Laser-Detection-and-Ranging-Systeme (LaDAR) oder dergleichen ausgestaltet und bezeichnet werden. Dabei wird eine Laufzeit vom Aussenden eines optischen Signals, insbesondere eines Lichtpulses, mit wenigstens einem elektrooptischen Sendebauteil und dem Empfang des entsprechenden reflektierten optischen Signals mit wenigstens einem elektrooptischen Empfangsbauteil gemessen und daraus eine Entfernung zwischen der Detektionsvorrichtung und dem erfassten Objekt ermittelt.

Vorteilhafterweise kann die wenigstens eine Detektionsvorrichtung als scannendes System ausgestaltet sein. Dabei kann mit optischen Signalen ein Überwachungsbereich abgetastet, also abgescannt, werden. Dazu können die entsprechenden optischen Signale, insbesondere Signalstrahlen, bezüglich ihrer Ausbreitungsrichtung über den Überwachungsbereich geschwenkt werden. Hierbei kommt die Umlenkspiegeleinrichtung zum Einsatz. Insbesondere aus der Spiegelstellung der Umlenkspiegeleinrichtung beim Umlenken der optischen Signale kann eine Richtung eines erfassten Objekts relativ zur Detektionsvorrichtung ermittelt werden.

Vorteilhafterweise kann die Detektionsvorrichtung als laserbasiertes Entfernungsmesssystem ausgestaltet sein. Das laserbasierte Entfernungsmesssystem kann als Lichtquelle wenigstens einen optoelektronisches Bauteil in Form eines Lasers, insbesondere einen Diodenlaser, aufweisen. Mit dem wenigstens einen Laser können insbesondere gepulste Laserstrahlen als optische Signale gesendet werden. Mit dem Laser können optische Signale in für das menschliche Auge sichtbaren oder nicht sichtbaren Wellenlängenbereichen emittiert werden. Entsprechend kann wenigstens ein optoelektronisches Bauteil in Form eines Empfängers wenigstens einen für die Wellenlänge des ausgesendeten Lichtes ausgelegten Detektor, insbesondere einen Punktsensor, Zeilensensor oder Flächensensor, im Besonderen eine (Lawinen)fotodiode, eine Photodiodenzeile, einen CCD-Sensor, einen Active-Pixel-Sensor, insbesondere einen CMOS-Sensor oder dergleichen, aufweisen. Das laserbasierte Entfernungsmesssystem kann vorteilhafterweise ein Laserscanner sein. Mit einem Laserscanner kann ein Überwachungsbereich mit optischen Signalen in Form von gepulsten Laserstrahlen abgetastet werden.

Die Erfindung kann vorteilhafterweise bei einem Fahrzeug, insbesondere einem Kraftfahrzeug, verwendet werden. Vorteilhafterweise kann die Erfindung bei einem Landfahrzeug, insbesondere einem Personenkraftwagen, einem Lastkraftwagen, einem Bus, einem Motorrad oder dergleichen, einem Luftfahrzeug und/oder einem Wasserfahrzeug verwendet werden. Die Erfindung kann auch bei Fahrzeugen eingesetzt werden, die autonom oder wenigstens teilautonom betrieben werden können. Die Erfindung ist jedoch nicht beschränkt auf Fahrzeuge. Sie kann auch im stationären Betrieb eingesetzt werden.

Die Detektionsvorrichtung kann vorteilhafterweise mit wenigstens einer elektronischen Steuervorrichtung des Fahrzeugs, insbesondere einem Fahrerassistenzsystem und/oder einer Fahrwerksregelung und/oder einer Fahrer-Informationseinrichtung und/oder einem Parkassistenzsystem und/oder einer Gestenerkennung oder dergleichen, verbunden oder Teil einer solchen sein. Auf diese Weise kann das Fahrzeug autonom oder teilautonom betrieben werden.

Mit der Detektionsvorrichtung können stehende oder bewegte Objekte, insbesondere Fahrzeuge, Personen, Tiere, Pflanzen, Hindernisse, Fahrbahnunebenheiten, insbesondere Schlaglöcher oder Steine, Fahrbahnbegrenzungen, Verkehrszeichen, Freiräume, insbesondere Parklücken, Niederschlag oder dergleichen, erfasst werden.

Bei einer vorteilhaften Ausführungsform können Spiegelflächenabschnitte der wenigstens einen Spiegelflächenanordnung, welche unterschiedliche Richtungen bezüglich wenigstens einer Drehachse aufweisen, ineinander übergehen. Auf diese Weise können Lücken bei der Umlenkung der optischen Signale vermieden werden, durch die blinde Abschnitte im Überwachungsbereich entstehen können.

Bei einer weiteren vorteilhaften Ausführungsform kann wenigstens ein Teil der Spiegelflächenabschnitte bezogen auf wenigstens eine jeweilige Richtungskomponente, welche sich in einer Ebene mit der wenigstens einen Drehachse befindet, unterschiedliche Richtungen aufweisen. Auf diese Weise kann der Überwachungsbereich in Richtung der Drehachse entsprechend vergrößert werden.

Bei einer weiteren vorteilhaften Ausführungsform können bei wenigstens einem Teil der Spiegelflächenabschnitte jeweilige Richtungskomponenten der Richtungen, welche sich in einer Ebene senkrecht zu der wenigstens einen Drehachse befinden, nicht radial zu der wenigstens einen Drehachse verlaufen. Auf diese Weise können die optischen Signale, die auf die Spiegelflächenanordnung treffen, aufgrund unterschiedliche Drehpositionen der wenigstens eine Spiegelflächenanordnung unterschiedlich umgelenkt werden,, sodass die Ausbreitungsrichtungen der umgelenkten optischen Signale insgesamt über den Überwachungsbereich geschwenkt werden.

Bei einer weiteren vorteilhaften Ausführungsform können
- Spiegelflächenabschnitte, welche bezüglich der wenigstens einen Drehachse unterschiedliche Richtungen aufweisen, in Richtung der wenigstens einen Drehachse betrachtet ineinander übergehen
- und/oder Spiegelflächenabschnitte, welche bezüglich wenigstens einer Drehachse unterschiedliche Richtungen aufweisen, können umfangsmäßig zu wenigstens einer Drehachse betrachtet ineinander übergehen.

Auf diese Weise kann die Detektionsreichweite und/oder die Winkelauflösung in Richtung der wenigstens einen Drehachse und/oder umfangsmäßig zu der wenigstens einen Drehachse entsprechend angepasst werden.

Durch die unterschiedliche Richtungen von Spiegelflächenabschnitten in Richtung der wenigstens einen Drehachse betrachtet kann die Aufweitung oder Konzentration von optischen Signalen in Richtung der wenigstens einen Drehachse betrachtet variiert werden.

Durch die unterschiedlichen Richtungen der Spiegelflächenabschnitte in Umfangsrichtung der wenigstens einen Drehachse betrachtet kann die Aufweitung oder Konzentration von reflektierten optischen Signalen senkrecht zur wenigstens einen Drehachse betrachtet variiert werden.

Bei einer weiteren vorteilhaften Ausführungsform kann wenigstens ein Teil der unterschiedlichen Richtungen von Spiegelflächenabschnitten mit wenigstens einer Krümmung realisiert werden. Mithilfe wenigstens einer Krümmung können Änderungen der Richtung von Spiegelflächenabschnitten erreicht werden.

Vorteilhafterweise kann wenigstens eine Krümmung kontinuierlich sein. Auf diese Weise können kontinuierliche Änderungsgradienten für Richtungen erzeugt werden. Alternativ oder zusätzlich kann wenigstens eine Krümmung diskret, insbesondere in Form eines Knicks oder dergleichen, realisiert sein. Auf diese Weise können diskrete Änderungsgradienten für Richtungen von Spiegelflächenabschnitten realisiert werden.

Vorteilhafterweise kann eine aus einer Vielzahl Spiegelflächenabschnitten bestehende Spiegelfläche insgesamt gekrümmt sein. Mittels der Krümmung kann eine Vielzahl, insbesondere unzählbar viele, unterschiedliche Richtungen realisiert werden.

Bei einer weiteren vorteilhaften Ausführungsform können wenigstens zwei Spiegelflächenabschnitte, welche in Umfangsrichtung bezüglich der wenigstens einen Drehachse benachbart sind, mittels wenigstens eines Knicks ineinander übergehen. Auf diese Weise kann erreicht werden, dass bei einer Drehung der Spiegelflächenanordnung um die wenigstens eine Drehachse beidseitig des Übergangs zwischen den benachbarten Spiegelflächenanordnung die reflektierten optischen Signale zu gegenüberliegenden Seiten des Überwachungsbereichs umgelenkt werden. Auf diese Weise kann durch Drehung der Spiegelflächenanordnung erreicht werden, dass die Ausbreitungsrichtungen der reflektierten optischen Signale in dem Überwachungsbereich hin und her geschwenkt werden.

Bei einer weiteren vorteilhaften Ausführungsform kann ein Änderungsgradient zwischen den Richtungen der Spiegelflächenabschnitte in Richtung wenigstens einer Drehachse betrachtet zu wenigstens einem stirnseitigen Rand der Spiegelflächenanordnung hin zunehmen. Auf diese Weise kann erreicht werden, dass ein senkrecht zu seiner Ausbreitungsrichtung in Richtung der wenigstens einen Drehachse ausgedehntes optisches Signal, welches die Spiegelflächenanordnung bis zu dem jeweiligen stirnseitigen Rand ausleuchtet, zum Rand der Spiegelflächenanordnung hin progressiv aufgeweitet wird. So kann der Überwachungsbereich in Richtung der Drehachse betrachtet weiter ausgedehnt werden.

Bei einer weiteren vorteilhaften Ausführungsform kann wenigstens ein Teil der Spiegelflächenabschnitte einteilig zusammenhängend sein. Auf diese Weise können Lücken bezogen auf die Umlenkung der optischen Signale vermieden werden.

Die Spiegelflächenabschnitte können auf einem die Form gebenden Trägerkörper insbesondere durch Bedampfung oder Beschichtung realisiert werden.

Bei einer weiteren vorteilhaften Ausführungsform kann
- die wenigstens eine Spiegelflächenanordnung in wenigstens einer Drehrichtung um 360° um die wenigstens eine Drehachse drehbar sein
- und/oder die wenigstens eine Spiegelflächenanordnung kann um einen vorgebbaren Schwenkwinkel um die wenigstens eine Drehachse hin und her schwenkbar sein.

Eine um 360° drehbare Spiegelflächenanordnung kann einfacher angetrieben und gesteuert werden. Eine Umkehr der Drehrichtung ist aber nicht erforderlich.

Durch Wechseln der Drehrichtung kann die Ausbreitungsrichtung der reflektierten optischen Signale hin und her geschwenkt werden.

Ferner wird die Aufgabe erfindungsgemäß bei der optischen Detektionsvorrichtung dadurch gelöst, dass wenigstens zwei Spiegelflächenabschnitte, die sich bezüglich der wenigstens einen Drehachse auf derselben Umfangsseite befinden, unterschiedliche Richtungen aufweisen.

Vorteilhafterweise kann wenigstens ein optoelektronisches Bauteil eine optische Lichtquelle, insbesondere ein Laser, sein. Mit dem optoelektronischen Bauteil können elektrische Signale in optische Signale umgewandelt werden. Die optischen Signale können auf die Umlenkspiegeleinrichtung gesendet und mit dieser in den Umlenkbereich umgelenkt werden.

Alternativ oder zusätzlich kann vorteilhafterweise wenigstens ein optoelektronisches Bauteil ein optischer Detektor sein. Mit einem optischen Detektor können optische Signale, insbesondere im Überwachungsbereich reflektierte optische Signale, in elektrische Signale umgewandelt werden. Die elektrischen Signale können dann mit einer entsprechenden elektronischen Auswerteeinrichtung verarbeitet werden.

Vorteilhafterweise kann die optische Detektionsvorrichtung wenigstens eine elektronische Steuer- und/oder Auswerteeinrichtung aufweisen. Mit der elektronischen Steuer- und/oder Auswerteeinrichtung kann die optische Detektionsvorrichtung, insbesondere die optoelektronischen Bauteile gesteuert, und mit der optischen Detektionsvorrichtung optische Signale ausgewertet werden. Aus den optischen Signalen können Objektinformationen, insbesondere eine Entfernung, eine Geschwindigkeit und/oder eine Richtung eines erfassten Objekts, relativ zur optischen Detektionsvorrichtung ermittelt werden.

Im Übrigen gelten die im Zusammenhang mit der erfindungsgemäßen Umlenkspiegeleinrichtung und der erfindungsgemäßen Detektionsvorrichtung und deren jeweiligen vorteilhaften Ausgestaltungen aufgezeigten Merkmale und Vorteile untereinander entsprechend und umgekehrt. Die einzelnen Merkmale und Vorteile können selbstverständlich untereinander kombiniert werden, wobei sich weitere vorteilhafte Wirkungen einstellen können, die über die Summe der Einzelwirkungen hinausgehen.

### Kurze Beschreibung der Zeichnungen

Weitere Vorteile, Merkmale und Einzelheiten der Erfindung ergeben sich aus der nachfolgenden Beschreibung, in der Ausführungsbeispiele der Erfindung anhand der Zeichnung näher erläutert werden. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen. Es zeigen schematisch
- Figur 1: ein Kraftfahrzeug in der Vorderansicht mit einem Fahrerassistenzsystem und einem Laserscanner zur Überwachung eines Überwachungsbereichs in Fahrtrichtung vor dem Kraftfahrzeug;
- Figur 2: eine Funktionsdarstellung des Kraftfahrzeugs mit dem Fahrerassistenz-system und dem Laserscanner aus der Figur 1;
- Figur 3: eine Draufsicht des Laserscanners aus den Figuren 1 und 2 gemäß einem ersten Ausführungsbeispiel;
- Figur 4: eine Seitenansicht einer Umlenkspiegelanordnung des Laserscanners aus der Figur 3;
- Figur 5: eine isometrische Ansicht der Umlenkspiegelanordnung des Laserscanners aus den Figuren 3 und 4 und dem Strahlenverlauf eines optischen Signals auf der Senderseite;
- Figur 6: eine Seitenansicht einer Umlenkspiegelanordnung für einen Laserscanner eines Kraftfahrzeugs gemäß der Figuren 1 und 2, gemäß einem zweiten Ausführungsbeispiel.

In den Figuren sind gleiche Bauteile mit gleichen Bezugszeichen versehen.

### Ausführungsform(en) der Erfindung

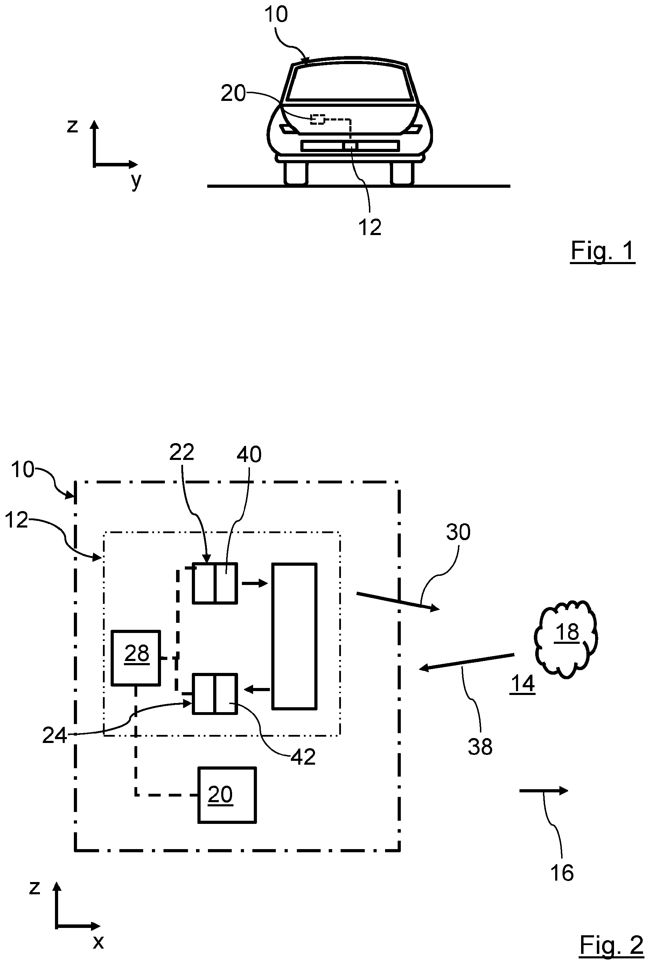

In der Figur 1 ist ein Fahrzeug 10 beispielhaft in Form eines Personenkraftwagens in der Vorderansicht gezeigt. In der Figur 2 eine Funktionsdarstellung des Fahrzeugs 10 gezeigt.

Das Fahrzeug 10 weist eine optische Detektionsvorrichtung 12 beispielhaft in Form eines Laserscanners auf. Die Detektionsvorrichtung 12 befindet sich beispielhaft in der vorderen Stoßstange des Fahrzeugs 10 und ist in einen Überwachungsbereich 14 beispielhaft in Fahrtrichtung 16 vor dem Fahrzeug 10 gerichtet. Die Detektionsvorrichtung 12 kann auch an anderer Stelle des Fahrzeugs 10 auch anders ausgerichtet angeordnet sein. Es können auch mehrere Detektionsvorrichtungen 12 vorgesehen sein. Die Detektionsvorrichtung 12 dient zur Überwachung des Überwachungsbereichs 14 auf Objekte 18 hin.

Der einfacheren Orientierung wegen sind in den Figuren 1 bis 6 die jeweiligen Achsen eines kartesischen x-y-z-Koordinatensystems gezeigt. Beispielhaft erstreckt sich die x-Achse in Fahrtrichtung 16 parallel zu einer Fahrzeuglängsachse des Fahrzeugs 10. Die y-Achse erstreckt sich parallel zu einer Fahrzeugquerachse in Fahrtrichtung 16 betrachtet nach links. Die z-Achse verläuft senkrecht zur x-y-Ebene nach räumlich oben. In der bestimmungsgemäßen Orientierung des Fahrzeugs 10 auf einer horizontalen Fahrbahn verlaufen die x-Achse und die y-Achse räumlich horizontal und die z-Achse räumlich vertikal.

Mit der Detektionsvorrichtung 12 können stehende oder bewegte Objekte, beispielsweise Fahrzeuge, Personen, Tiere, Pflanzen, Hindernisse, Fahrbahnunebenheiten, insbesondere Schlaglöcher oder Steine, Fahrbahnbegrenzungen, Verkehrszeichen, Freiräume, insbesondere Parklücken, Niederschlag oder dergleichen, erfasst werden. Mit der Detektionsvorrichtung 12 können Entfernungen, Richtungen und/oder Geschwindigkeiten von Objekten 18 relativ zum Fahrzeug 10 ermittelt werden.

Ferner verfügt das Fahrzeug 10 über ein Fahrerassistenzsystem 20. Mit dem Fahrerassistenzsystem 20 kann das Fahrzeug 10 autonom oder teilautonom betrieben werden. Die Detektionsvorrichtung 12 ist funktional mit dem Fahrerassistenzsystem 20 verbunden. Über die Verbindung können Informationen, die mit der Detektionsvorrichtung 12 aus dem Überwachungsbereich 14 beispielsweise über etwaige Objekte 18 erfasst werden, an das Fahrerassistenzsystem 20 übermittelt werden.

Die Detektionsvorrichtung 12 umfasst beispielhaft eine Sendeeinrichtung 22, eine Empfangseinrichtung 24, eine Umlenkspiegeleinrichtung 26 und eine Steuer- und Auswerteeinrichtung 28.

Die Sendeeinrichtung 22 verfügt über ein optoelektronisches Sendebauteil 40 beispielhaft in Form einer Laserdiode. Die Sendeeinrichtung 22 ist funktional, beispielsweise zur Steuerung und Stromversorgung, mit der Steuer- und Auswerteeinrichtung 28 verbunden. Mit der Sendeeinrichtung 22, respektive dem Sendebauteil 40, können optische Signale 30, beispielsweise in Form von Laserpulsen, erzeugt werden.

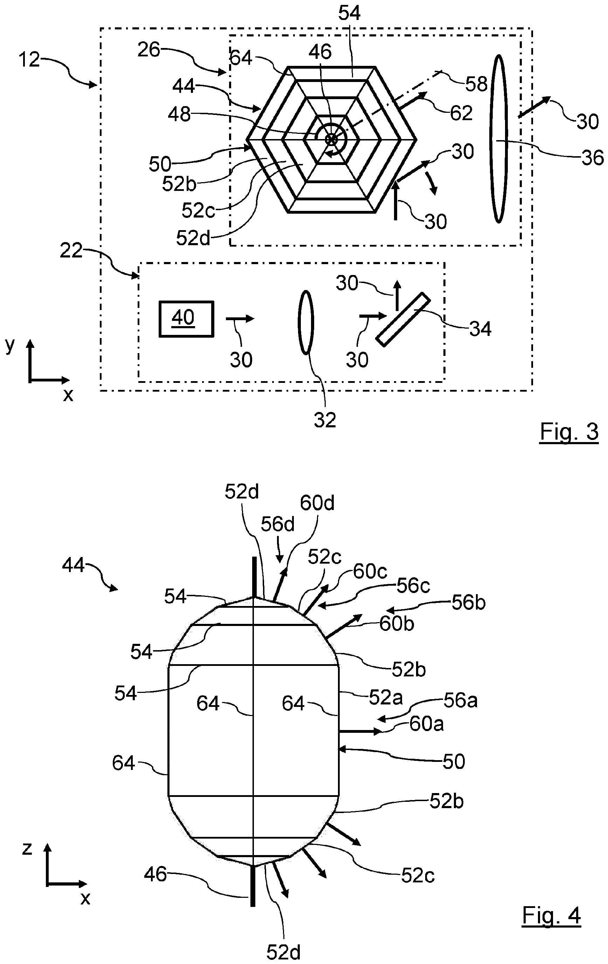

In der Figur 3 ein Detektionsvorrichtung 12 mit einer Umlenkspiegeleinrichtung 26 gemäß einem ersten Ausführungsbeispiel und der Sendeeinrichtung 22 gezeigt. Die Empfangseinrichtung 24 befindet sich in der in Figur 3 gezeigten Perspektive im Hintergrund und ist von der Sendeeinrichtung 22 verdeckt und daher dort nicht gezeigt.

Die Sendeeinrichtung 22 weist eine Sendeoptik 32 beispielhaft in Form einer optischen Linse auf. Mit der Sendeoptik 32 werden die optischen Signale 30 quer zu ihrer Ausbreitungsrichtung in Richtung der z-Achse aufgeweitet. Ferner weist die Sendeeinrichtung 22 in Ausbreitungsrichtung der Signale 30 hinter der Sendeoptik 32 einen Spiegel 34 auf. Mit dem Spiegel 34 werden die optischen Signale 30 beispielhaft um 45° in der x-y-Ebene zu der Umlenkspiegeleinrichtung 26 umgelenkt.

Mit der Umlenkspiegeleinrichtung 26 werden die optischen Signale 30 je nach Drehposition umgelenkt. Durch Veränderung der Drehposition werden die Ausbreitungsrichtungen der Signale 30 in der x-y-Ebene, beispielhaft in der Horizontalen, geschwenkt. Der Schwenkbereich definiert abhängig von der Entfernung zu der Detektionsrichtung 12 die vertikale Breite des Überwachungsbereichs 14.

In Ausbreitungsrichtung der optischen Signale 30 hinter der Umlenkspiegeleinrichtung 26 ist eine Linse 36 angeordnet. Mit der Linse 36 werden die optischen Signale 30 in Richtung der z-Achse aufgeweitet. Die Ausdehnung der optischen Signale 30 in Richtung der z-Achse hinter der Linse 36 definiert abhängig von der Entfernung zu der Detektionsvorrichtung 12 die vertikale Höhe des Überwachungsbereichs 14.

Die optischen Signale 30, welche im Überwachungsbereich 14 auf ein Objekt 18 treffen, werden reflektiert und zurückgesendet. Die reflektierten optischen Signale 38, welche auf die Umlenkspiegeleinrichtung 26 treffen, werden, wie in der Figur 2 angedeutet, mit dieser zu der Empfangseinrichtung 24 umgelenkt.

Die Empfangseinrichtung 24 umfasst ein optoelektronisches Empfangsbauteil 42 in Form eines optischen Detektors, beispielsweise eines Punktsensor, eines Zeilensensors oder eines Flächensensors, im Besonderen einer (Lawinen-)photodiode, einer Photodiodenzeile, eines CCD-Sensors oder dergleichen. Mit dem optoelektronischen Empfangsbauteil 42 können die reflektierten optischen Signale 38 in entsprechende elektrische Signale umgewandelt werden, welche mit der Steuer- und Auswerteeinrichtung 28 verarbeitet werden können.

Die Umlenkspiegeleinrichtung 26 verfügt über eine Spiegelflächenanordnung 44 welche um eine Drehachse 46 drehbar ist. Die Drehachse 46 verläuft beispielhaft parallel zur z-Achse, in betriebsgemäß Ausrichtung räumlich vertikal. Die Umlenkspiegeleinrichtung 26 verfügt über eine Antriebseinrichtung für die Spiegelflächenanordnung 44, welche in der Figur 3 der besseren Übersichtlichkeit nicht gezeigt ist. Beispielhaft wird die Spiegelflächenanordnung 44 in einer Drehrichtung 48, beispielhaft von oben entgegen der z-Achse betrachtet, im Uhrzeigersinn gedreht.

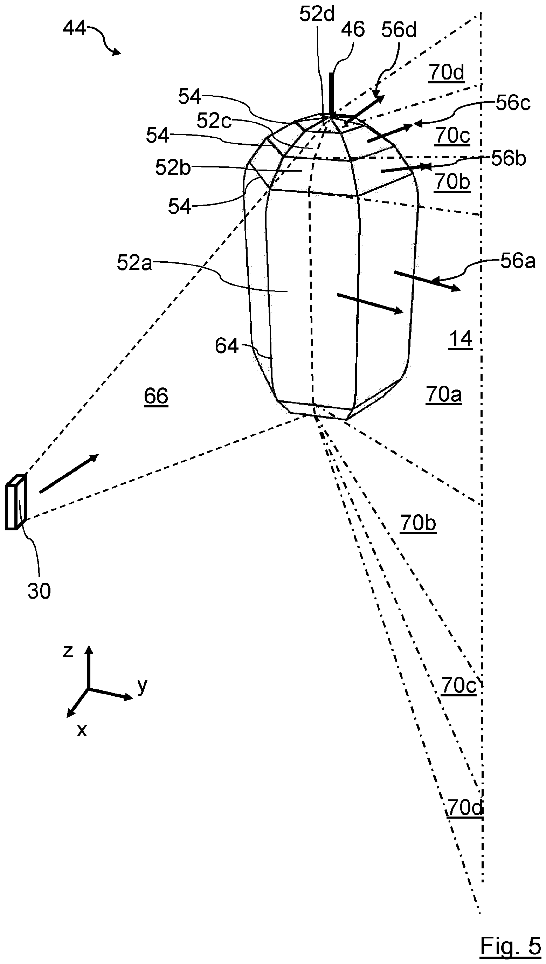

Die Spiegelflächenanordnung 44 umfasst beispielhaft sechs Spiegelsegmente 50. Die Spiegelsegmente 50 sind, wie auch in der Figur 3 gezeigt, bezüglich der Drehachse 46 umfangsmäßig gleichmäßig hexagonal angeordnet. Die Spiegelsegmente 50 sind bezüglich ihrer Form und ihrer jeweiligen Abmessung identisch. Jedes Spiegelsegment 50 umfasst, wie auch in den Figuren 4 und 5 gezeigt, einen Haupt-Spiegelflächenabschnitt 52a im Zentrum. Auf gegenüberliegenden Seiten des Haupt-Spiegelflächenabschnitts 52a sind symmetrisch jeweils drei Rand-Spiegelflächenabschnitte 52b, 52c und 52d angeordnet. In Richtung der Drehachse 46 betrachtet ergibt sich von unten nach oben folgende Reihenfolge: ein unterer Rand-Spiegelflächenabschnitt 52d, ein unterer Rand-Spiegelflächenabschnitt 52c, ein unterer Rand-Spiegelflächenabschnitt 52b, der Haupt-Spiegelflächenabschnitt 52a, ein Ober Rand-Spiegelflächenabschnitt 52b, ein oberer Rand-Spiegelflächenabschnitt 52c und ein oberer Rand-Spiegelflächenabschnitt 52d.

Beispielhaft sind sowohl der Haupt-Spiegelflächenabschnitt 52a als auch die Rand-Spiegelflächenabschnitte 52b, 52c und 52d jeweils eben. Bei einem anderen Ausführungsbeispiel können wenigstens Teile der Spiegelflächenabschnitte 52a bis 52d wenigstens teilweise gekrümmt sein.

Der Haupt-Spiegelflächenabschnitt 52a geht jeweils mit einer diskreten Krümmung in Form eines Knicks 54 in die Rand-Spiegelflächenabschnitte 52b über. Die Rand-Spiegelflächenabschnitte 52b gehen jeweils mit einem Knick 54 in die Rand-Spiegelflächenabschnitte 52c über. Die Rand-Spiegelflächenabschnitte 52c gehen jeweils mit einem Knick 54 in die Rand-Spiegelflächenabschnitte 52d über.

Eine Richtung 56a des Haupt-Spiegelflächenabschnitts 52a erstreckt sich parallel zum Radius zu der Drehachse 46 durch die Mitte des Haupt-Spiegelflächenabschnitts 52a.

Die Richtung eines Spiegelflächenabschnitts ist definiert durch die Normale, also die Senkrechte, auf den entsprechenden Spiegelflächenabschnitt. Da der Haupt-Spiegelflächenabschnitt 52a und die Rand-Spiegelflächenabschnitte 52b bis 52d jeweils eben sind, ist die jeweilige Richtung entlang des jeweiligen Spiegelflächenabschnitts 52a bis 52d konstant.

Die Rand-Spiegelflächenabschnitte 52b sind gegenüber dem Haupt-Spiegelflächenabschnitt 52a zur Drehachse 46 hin geneigt. Entsprechend sind die jeweiligen Richtungen 56b gegenüber der Richtung 56a geneigt.

Ferner sind die Rand-Spiegelflächenabschnitte 52c gegenüber den jeweils benachbarten Rand-Spiegelflächenabschnitten 52b und entsprechend die Richtungen 56c gegenüber den Richtungen 56b zur Drehachse 46 hin geneigt.

Außerdem sind die Rand-Spiegelflächenabschnitte 52d gegenüber den jeweils benachbarten Rand-Spiegelflächenabschnitten 52c und entsprechend die Richtungen 56d gegenüber den Richtungen 56c zur Drehachse 46 hin geneigt.

Insgesamt hat die Spiegelflächenanordnung 44 einen hexagonal Umfang und verjüngt sich in Richtung der Drehachse 46 zu beiden Enden hin symmetrisch.

Jede der Richtungen 56a bis 56d setzt sich zusammen aus einer entsprechenden axialen Richtungskomponente 60a bis 60d und einer entsprechenden umfangsmäßigen Richtungskomponente 62.

Die axialen Richtungskomponenten 60a bis 60d sind beispielsweise in der Figur 4 in der Seitenansicht gezeigt. Die axialen Richtungskomponenten 60a bis 60d der Richtungen 56a bis 56d befindet sich in einer Ebene mit der Drehachse 46.

Die umfangsmäßigen Richtungskomponenten 62 der Richtungen 56a bis 56d befindet sich in einer jeweiligen Ebene senkrecht zur Drehachse 46, also parallel zur x-y-Ebene. Die umfangsmäßigen Richtungskomponenten 62 der Richtungen 56a bis 56d sind bei dem gezeigten Ausführungsbeispiel identisch. Die umfangsmäßige Richtungskomponente 62 der Richtung 56a einer der Haupt-Spiegelflächenabschnitte 52a ist beispielhaft in der Figur 3 gezeigt. Da alle Spiegelflächenabschnitte 52a bis 52d beispielhaft ebene Flächen sind, sind die jeweiligen umfangsmäßigen Richtungskomponenten 62a bis 62d und die entsprechenden axialen Richtungskomponenten 60a bis 60d über den jeweiligen Spiegelflächenabschnitt 52a bis 52d konstant.

Die axialen Richtungskomponenten 60a des Haupt-Spiegelflächenabschnitts 52a und die axialen Richtungskomponenten 60b, 60c und 60d der Rand-Spiegelflächenabschnitte 52b, 52c und 52d sind zueinander geneigt, also unterschiedlich. Die Spiegelflächen 52a bis 52d jedes Spiegelsegments 50 weisen unterschiedliche Richtungen auf. Dabei ist ein Änderungsgradient zwischen den benachbarten Richtungen 56a bis 56d, respektive die axialen Richtungskomponenten 60a bis 60d, vom Haupt-Spiegelflächenabschnitt 52a jeweils zu den äußeren Rand-Spiegelflächenabschnitten 52d betrachtet, progressiv, das heißt, das Maß der Neigung zwischen den jeweils benachbarten Spiegelflächenabschnitten 52a bis 52d nimmt nach außen hin zu.

Benachbarte Spiegelsegmente 50 gehen jeweils über einen Knick 64 ineinander über.

Beim Betrieb der Detektionsvorrichtung 12 wird die Spiegelflächenanordnung 44 beispielsweise kontinuierlich in Drehrichtung 48 um die Drehachse 46 gedreht. Mit dem Sendebauteil 40 der Sendeeinrichtung 42 wird ein optisches Signal 30 in Form eines Laserpulses erzeugt. Mittels der Sendeoptik 32 mit der Laserpuls 30 in Richtung der z-Achse aufgeweitet und über den Spiegel 34 zu der Spiegelflächenanordnung 44 gesendet.

Ein Ausbreitungsbereich 66, in dem sich das aufgeweitete Signal 30 in Ausbreitungsrichtung vor der Spiegelflächenanordnung 44 ausbreitet, ist in der Figur 5 angedeutet. Das Signal 30 hat eine Ausdehnung in seiner Ausbreitungsrichtung, welche über die zeitliche Länge des Laserpulses definiert ist. Eine Ausdehnung des Signals 30 in Richtung der z-Achse nimmt mit zunehmender Entfernung von der Sendeoptik 32 zu. Eine Ausdehnung quer zur Ausbreitungsausrichtung und quer zur z-Achse bleibt über die Entfernung nahezu konstant. Der Ausbreitungsbereich 68 des Signals 30 hinter der Spiegelflächenanordnung 44 ist ebenfalls in der Figur 5 gezeigt.

Das Signal 30 leuchtet das Spiegelsegment 50, welches in dem Moment des Auftreffens dem Spiegel 34 zugewandt ist, über die gesamte Ausdehnung in Richtung der Drehachse 46 an. Das Signal 30 trifft also auf alle Spiegelflächenabschnitte 52a bis 52d des entsprechenden Spiegelsegments 50 und wird abhängig von deren jeweiligen Richtungen 56a bis 56d in entsprechende Zonen 70a bis 70d des Ausbreitungsbereichs 68 umgelenkt. Eine Hauptzone 70a ist der Haupt-Spiegelflächenabschnitt 52a zugeordnet. Entsprechende Randzonen 70b bis 70d sind den jeweiligen Rand-Spiegelflächenabschnitten 52b bis 52d zugeordnet.

Die gesamte Ausdehnung der Hauptzone 60a und der Randzonen 70b bis 70d in Richtung der z-Achse definieren die vertikale Höhe des Überwachungsbereichs 14. Durch die unterschiedlichen Richtungen 56a bis 56d der Spiegelflächenabschnitte 52a bis 52d wird insgesamt die vertikale Höhe des Überwachungsbereichs 14 vergrößert.

Dadurch, dass die Spiegelflächenanordnung 44 kontinuierlich gedreht wird, treffen nachfolgende optische Signale 30 auf unterschiedliche Stellen gegebenenfalls von unterschiedlichen Spiegelsegmenten 50, sodass Ablenkung der Ausbreitungsrichtungen der Signale 30 quer zur Drehachse 46, also in horizontaler Richtung, unterschiedlich ist. So wird der Überwachungsbereich in horizontaler Richtung mit einer Vielzahl von einander folgenden optischen Signalen 30 abgetastet. Dabei leuchtet jedes der optischen Signale 30 die volle vertikale Höhe des Überwachungsbereichs 14 aus. Dadurch, dass die Spiegelsegment der 50 bezüglich der Drehachse 46 umfangsmäßig lückenlos angeordnet sind, trifft unabhängig von der Drehposition der Spiegelflächenanordnung 44 jedes optische Signal 30 eines der Spiegelsegmente 50.

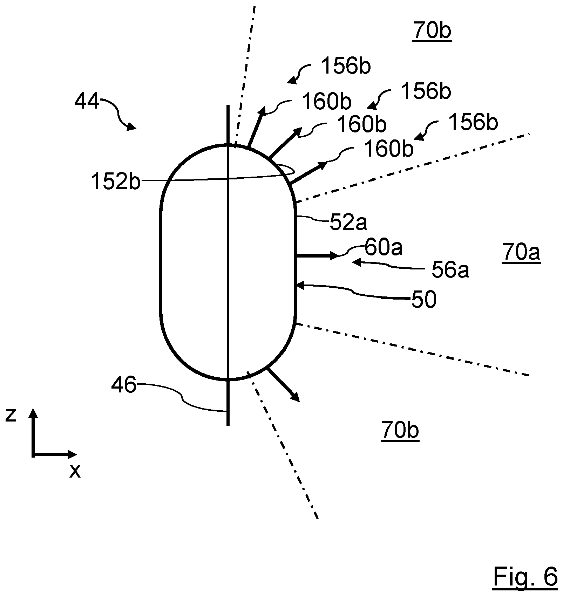

In der Figur 6 ist eine Spiegelflächenanordnung 44 gemäß einem zweiten Ausführungsbeispiel gezeigt. Diejenigen Elemente, die zu denen des ersten Ausführungsbeispiels aus den Figuren 3 bis 5 ähnlich sind, sind mit denselben Bezugszeichen versehen. Das zweite Ausführungsbeispiel unterscheidet sich von dem ersten Ausführungsbeispiel dadurch, dass die Haupt-Spiegelflächenabschnitte 52a auf gegenüberliegenden Seiten jeweils kontinuierlich in einen jeweiligen Rand-Spiegelflächenabschnitt 152b übergeht. Die Rand-Spiegelflächenabschnitte 152b sind jeweils von außen betrachtet in der Ebene mit der Drehachse 46. In der Ebene senkrecht zur Drehachse 46 sind die Rand-Spiegelflächenabschnitte 152b jeweils eben. Die Rand-Spiegelflächenabschnitte 152b können also auch als unzählbar viele Rand-Spiegelflächenabschnitte mit entsprechend unzählbar vielen unterschiedlichen Richtungen 156b, respektive unzählbar vielen unterschiedlichen axialen Richtungskomponenten 160b, betrachtet werden. In der Figur 6 sind exemplarisch lediglich drei der axialen Richtungskomponenten 160b gezeigt.

Durch die gekrümmten Rand-Spiegelflächenabschnitte 152b wird erreicht, dass ein auftreffendes optisches Signal 30 in vertikaler Richtung lückenlos aufgefächert wird.

## Patentansprüche

1. Umlenkspiegeleinrichtung (26) für eine optische Detektionsvorrichtung (12) zur Erfassung von Objekten (18) in wenigstens einem Überwachungsbereich (14),
- mit wenigstens einer Spiegelflächenanordnung (44), welche wenigstens einen Spiegelflächenabschnitt (52a, 52b, 52c, 52d; 152b) zur Umlenkung von optischen Signalen (30, 38) aufweist,
- mit wenigstens einer Drehachse (46), um die die wenigstens eine Spiegelflächenanordnung (44) drehbar ist,
**dadurch gekennzeichnet, dass**
wenigstens zwei Spiegelflächenabschnitte (52a, 52b, 52c, 52d; 152b), die sich bezüglich der wenigstens einen Drehachse (46) auf derselben Umfangsseite befinden, unterschiedliche Richtungen (56a, 56b, 56c, 56d; 156b) aufweisen.

2. Umlenkspiegeleinrichtung nach Anspruch 1, **dadurch gekennzeichnet, dass** Spiegelflächenabschnitte (52a, 52b, 52c, 52d; 152b) der wenigstens einen Spiegelflächenanordnung (44), welche unterschiedliche Richtungen (56a, 56b, 56c, 56d; 156b) bezüglich wenigstens einer Drehachse (46) aufweisen, ineinander übergehen.

3. Umlenkspiegeleinrichtung nach Anspruch 1 oder 2, **dadurch gekennzeichnet, dass** wenigstens ein Teil der Spiegelflächenabschnitte (52a, 52b, 52c, 52d; 152b) bezogen auf wenigstens eine jeweilige Richtungskomponente (60a, 60b, 60c, 60d; 160b), welche sich in einer Ebene mit der wenigstens einen Drehachse (46) befindet, unterschiedliche Richtungen (56a, 56b, 56c, 56d; 156b) aufweisen.

4. Umlenkspiegeleinrichtung nach einem der vorigen Ansprüche, **dadurch gekennzeichnet, dass** bei wenigstens einem Teil der Spiegelflächenabschnitte (52a, 52b, 52c, 52d; 152b) jeweilige Richtungskomponenten (62) der Richtungen (56a, 56b, 56c, 56d; 156b), welche sich in einer Ebene senkrecht zu der wenigstens einen Drehachse (46) befinden, nicht radial zu der wenigstens einen Drehachse (46) verlaufen.

5. Umlenkspiegeleinrichtung nach einem der vorigen Ansprüche, **dadurch gekennzeichnet, dass**
- Spiegelflächenabschnitte (52a, 52b, 52c, 52d; 152b), welche bezüglich der wenigstens einen Drehachse (46) unterschiedliche Richtungen (56a, 56b, 56c, 56d; 156b) aufweisen, in Richtung der wenigstens einen Drehachse (46) betrachtet ineinander übergehen
- und/oder Spiegelflächenabschnitte (52a, 52b, 52c, 52d; 152b), welche bezüglich wenigstens einer Drehachse (46) unterschiedliche Richtungen (56a, 56b, 56c, 56d; 156b) aufweisen, umfangsmäßig zu wenigstens einer Drehachse (46) betrachtet ineinander übergehen.

6. Umlenkspiegeleinrichtung nach einem der vorigen Ansprüche, **dadurch gekennzeichnet, dass** wenigstens ein Teil der unterschiedlichen Richtungen (156b) von Spiegelflächenabschnitten (152b) mit wenigstens einer Krümmung realisiert werden.

7. Umlenkspiegeleinrichtung nach einem der vorigen Ansprüche, **dadurch gekennzeichnet, dass** wenigstens zwei Spiegelflächenabschnitte (52a, 52b, 52c, 52d; 152b), welche in Umfangsrichtung bezüglich der wenigstens einen Drehachse (46) benachbart sind, mittels wenigstens eines Knicks ineinander übergehen.

8. Umlenkspiegeleinrichtung nach einem der vorigen Ansprüche, **dadurch gekennzeichnet, dass** ein Änderungsgradient zwischen den Richtungen (56a, 56b, 56c, 56d) der Spiegelflächenabschnitte (52a, 52b, 52c, 52d) in Richtung wenigstens einer Drehachse (46) betrachtet zu wenigstens einem stirnseitigen Rand der Spiegelflächenanordnung (44) hin zunimmt.

9. Umlenkspiegeleinrichtung nach einem der vorigen Ansprüche, **dadurch gekennzeichnet, dass** wenigstens ein Teil der Spiegelflächenabschnitte (52a, 52b, 52c, 52d; 152b) einteilig zusammenhängend ist.

10. Umlenkspiegeleinrichtung nach einem der vorigen Ansprüche, **dadurch gekennzeichnet, dass**
- die wenigstens eine Spiegelflächenanordnung (44) in wenigstens einer Drehrichtung um 360° um die wenigstens eine Drehachse (46) drehbar ist
- und/oder die wenigstens eine Spiegelflächenanordnung um einen vorgebbaren Schwenkwinkel um die wenigstens eine Drehachse hin und her schwenkbar.

11. Optische Detektionsvorrichtung (12) zur Überwachung wenigstens eines Überwachungsbereichs (14) auf Objekte (18) hin,
- mit wenigstens einem optoelektronischen Bauteil (40, 42) zur Umwandlung zwischen optischen Signalen (30, 38) und elektrischen Signalen,
- mit wenigstens einer Umlenkspiegeleinrichtung (26), mit welcher die optischen Signale (30, 38) umgelenkt werden können,
- wobei die wenigstens eine Umlenkspiegeleinrichtung (26) aufweist
- wenigstens eine Spiegelflächenanordnung (44) zur Umlenkung von optischen Signalen (30, 38),
- und wenigstens eine Drehachse (46), um die die wenigstens eine Spiegelflächenanordnung (44) drehbar ist,
**dadurch gekennzeichnet, dass**
wenigstens zwei Spiegelflächenabschnitte (52a, 52b, 52c, 52d; 152b), die sich bezüglich der wenigstens einen Drehachse (46) auf derselben Umfangsseite befinden, unterschiedliche Richtungen (56a, 56b, 56c, 56d; 156b) aufweisen.
